# EUROPÄISCHE PATENTSCHRIFT

(11) **EP 1 270 457 B1**
(45) Veröffentlichungstag und Bekanntmachung des Hinweises auf die Patenterteilung: **22.12.2004**
(21) Anmeldenummer: 02012162.0
(22) Anmeldetag: 26.06.1998
(51) Int. Cl.: B65G 39/16

(54) **Gurtlenkstation**
Belt steering device
Appareil de guidage d'une courroie

(30) Priorität: 12.08.1997 DE 29714416 U
(43) Veröffentlichungstag der Anmeldung: 02.01.2003
(62) Teilanmeldung aus: 98111826.8
(73) Patentinhaber: TRANSNORM SYSTEM GmbH, 31177 Harsum (DE)
(72) Erfinder: Warnecke, Karl, 31079 Sibbesse (DE)
(74) Vertreter: Siekmann, Gunnar, Dipl.-Phys.

(56) Entgegenhaltungen:
- EP-A- 0 545 443
- GB-A- 552 697
- GB-A- 2 071 598
- US-A- 2 553 473
- US-A- 4 506 782

## Beschreibung

Die Erfindung betrifft eine Lenkrollenvorrichtung für den Fördergurt eines Bandförderers mit den Merkmalen des Oberbegriffs des Patentanspruchs 1.

Bei Vorrichtungen zum Ein- und Ausschleusen von Fördergut unter einem spitzen Winkel in die Förderstrecke eines Bandförderers ist es bekannt, starre Umlenkstäbe zu verwenden. Die Reibung des Fördergurtes an den Umlenkstäben erzeugt Wärme, die teilweise ungleichmäßig auf die Gurttrums übertragen wird. Als Folge davon kann sich eine ungleichmäßige Spannung des Gurtes einstellen. Diese führt zu einem seitlichen Ablaufen des Gurtes bis zur Berührung mit dem tragenden Gestell der Vorrichtung. Um die Erwärmung der Umlenkstäbe gering zu halten, wird der Gurt bei der Montage nicht oder nur geringfügig gespannt. Durch das seitliche Gegenlaufen gegen das Traggestell wölbt sich der Gurt auf. Ferner ist zu berücksichtigen, daß das Gurtmaterial, insbesondere durch das darin befindliche Polyestergewebe, bei steigender Temperatur schrumpft. Daraus kann sich ein überproportionaler und ungleichmäßiger Anstieg der Gurtspannung bis zum totalen Ausfall der Fördervorrichtung ergeben.

Es ist bekannt, für Fördergurte, die eine Tendenz zum seitlichen Ablaufen zeigen, eine Lenkrolle einzusetzen, die dem seitlichen Ablaufen entgegenwirken soll. Die Lenkrolle wirkt nur auf eine Fläche des Untertrums. Es ist die Fläche, die nach dem Umlenken des Gurtes in den Obertrum das Fördergut trägt. Die Lenkrolle ist in der Ebene des Gurtes um wenige Grade schwenkbar. Mit einer Lenkrolle bekannter Ausführung sind mit Abstand in Laufrichtung des Gurtes vor der Lenkrolle Fühlerstäbe starr verbunden. Die Fühlerstäbe befinden sich an beiden Seiten des Gurtes. Beim Anlaufen einer Gurtkante an den ihr zugeordneten Fühlerstab wird durch den Anlaufdruck die Lenkrolle entsprechend geschwenkt. Die Rollbewegung der Lenkrolle schräg zur Gurtlaufrichtung führt zu Reaktionskräften. Diese haben eine quer zur Laufrichtung des Gurtes weisende Komponente, die zu einem Rückstellen des Gurtes führt.

Bekannt sind ferner Lenkrollen, die durch Fremdkraft betrieben werden. Sie können über berührungslose Abtastvorrichtungen, beispielsweise Lichtschranken oder kapazitive Sensoren, mit Hilfe pneumatischer oder elektromotorisch wirkender Vorrichtungen verstellt, d.h. geschwenkt werden.

Eine gattungsgemäße Lenkrollenvorrichtung ist aus der US 4,506,782 bekannt, die eine Lenkstation aufweist. Auf der Lenkstation sind zwei hintereinander eingeordnete Lenkrollen vorgesehen, zwischen denen der Fördergurt hindurchläuft. Weiterhin sind an der Lenkstation auch Fühlerrollen zum Ausrichten der Lenkstation vorhanden.

Eine weitere Lenkrollenvorrichtung ist aus der GB-A-552697 bekannt. Die Lenkstationen dieser Lenkrollenvorrichtung sind jedoch außergurtmittig gelagert. Die EP 0 545 443 A1 und die UNS 2,553,473 zeigen weitere Lenkrollenvorrichtungen.

Die bekannten Ausführungen sind jedoch nicht für Fördergurte geeignet, die fast keine Spannung aufweisen, beispielsweise bei einer eingangs erläuterten Vorrichtung zum Ein- und Ausschleusen gemäß EP 0 678 464 A1. Lose Gurte mit einer derartig geringen Spannung können nur sehr geringe Lenkrollenkräfte übertragen, die zum Rückstellen eines seitlich ablaufenden Gurtes nicht ausreichen. Es fehlt ferner eine ausreichende Quersteifigkeit, so daß auch aus diesem Grunde die Übertragung der seitlich gerichteten Rückstellkräfte erschwert wird. Ein Einsatz der bekannten Lenkrollenvorrichtungen für eine Vorrichtung mit sehr flexiblen Gurten ohne Spannung ist also nicht möglich. Die bekannten Lenkrollenvorrichtungen waren daher auf steife und gespannte Gurte für Förderbandeinrichtungen beschränkt, die zum Transport von Schüttgütern eingesetzt werden.

Aufgabe der Erfindung ist es, eine Lenkvorrichtung für Fördergurte zu schaffen, die in der Lage ist, nicht nur in steife und gespannte Gurte mit einer Tendenz zum seitlichen Ablaufen Rückstellkräfte einzuleiten, sondern Steuerungskräfte gegen seitliches Ablaufen wirksam auch auf nicht oder nur geringfügig gespannte und sehr flexible, querlabile Gurte zu übertragen. Die Erfindung löst diese Aufgabe mit einer Lenkstation mit den Merkmalen des Patentanspruches 1.

Bei einer Lenkrollenvorrichtung, bei der der Untertrum des Gurtes zwischen einem Paar Lenkrollen geführt wird, welche um ihre Längsachsen drehbar in der Lenkstation angeordnet sind, die Lenkstation mit den Lenkrollen um eine Drehachse, die sich senkrecht zur Gurtebene erstreckt, schwenkbar ausgebildet ist, die Lenkrollen in einer Konsole der Lenkstation gelagert sind, die Drehachse durch ein zylindrisches Element gebildet wird, an welchem die Konsole drehbar befestigt ist und an der Lenkstation Fühlerrollen befestigt sind, die sich in Laufrichtung des Untertrums vor den Lenkrollen und an beiden Seiten des unteren Gurttrums befinden, ist erfindungswesentlich, daß die Lenkrollen unmittelbar übereinander angeordnet sind und mit einer Anpreßkraft auf den zwischen ihnen geführten Gurt gedrückt sind, und daß Federelemente zum elastischen Andrücken der Lenkrollen an den Fördergurt vorgesehen sind.

Bei sehr breiten Gurten oder bei größeren Andruckkräften ist es zur Erleichterung der Schwenkfähigkeit möglich, die Lenkrollen mehrteilig auszuführen. Die Radierwirkung wird dadurch erheblich verringert.

Der Kontakt der Gurtkanten mit den Fühlerrollen erzeugt eine geringe Rollreibung und schont die Gurtkanten. Das ist insbesondere bei dünnen, flexiblen oder querlabilen Gurten von Vorteil. Besonders vorteilhaft ist die Anwendung der federnden, auf die Lenkrollen wirkenden Anpreßkraft, die durch die Federelemente erzeugt wird.

Die Lenkstation mit den Erfindungsmerkmalen ist geeignet, nicht nur die in üblicher Weise gespannten, sondern dünne, flexible Gurte im ungespannten Zustand wirkungsvoll, ohne den Einsatz von Fremdkraft, d.h. selbsttätig zu steuern. Die Gurte werden dadurch am seitlichen Ablaufen von ihren Antriebs-, Trag- und Umlenkrollen gehindert. Mit der federnden Anpreßkraft der Lenkrollen wird die Quersteifigkeit des Gurtes automatisch verbessert. Er erhält ständig den notwendigen Anpreßdruck in richtiger Größe. Eine Berücksichtigung der Gurtschlösser ist bei der Einrichtung nicht mehr notwendig. Die Anwendung federnder Anpreßkräfte ist insbesondere bei geringen Dicken von Vorteil, da gerade hier Gurtschlösser eine erhebliche Gurtstärkendifferenz bilden.

In der Zeichnung ist ein Ausführungsbeispiel der Erfindung schematisch anhand einer Ein- und Ausschleusvorrichtung für Fördergut dargestellt und nachstehend erläutert. Es zeigen:
- Figur 1: eine Ein- und Ausschleusvorrichtung in schaubildlicher Darstellung mit einer Lenkstation, jedoch ohne die erfindungsgemäßen Federelemente,
- Figur 2: in schaubildlicher Darstellung die Ausbildung der Lenkstation mit unterteilten Lenkrollen,
- Figur 3: die Draufsicht auf eine Lenkstation mit Lenkrollen,
- Figur 4: eine Seitenansicht der Lenkstation gemäß Figur 3,
- Figur 5: einen Längsschnitt entlang der Gurtmittenlinie durch die Lenkstation gemäß Figur 3,
- Figur 6: eine Einzelheit der Figur 5,
- Figuren 7 bis 9: unterschiedliche Positionen der Lenkrollen zur Erläuterung eines Steuerungsbeispiels,
- Figur 10: eine Lenkvorrichtung mit den erfindungsgemäßen, federnden Anpreßelementen,
- Figur 11: die Draufsicht auf die Lenkvorrichtung gemäß Figur 10 und
- Figur 12: eine Seitenansicht der Vorrichtung gemäß Figuren 10 und 11.

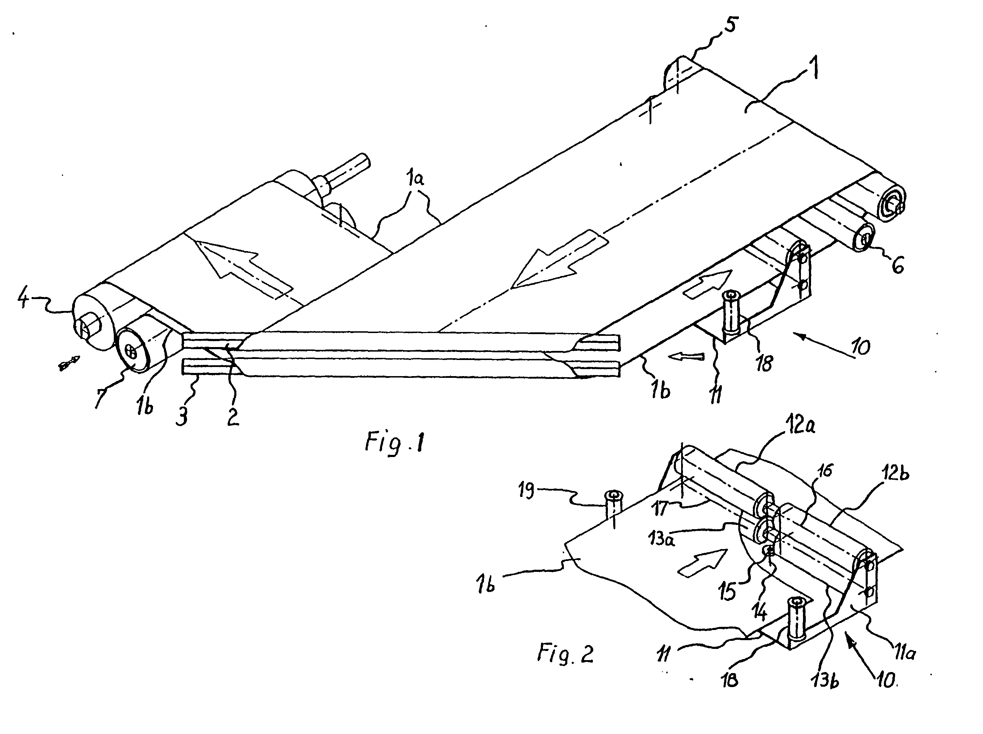

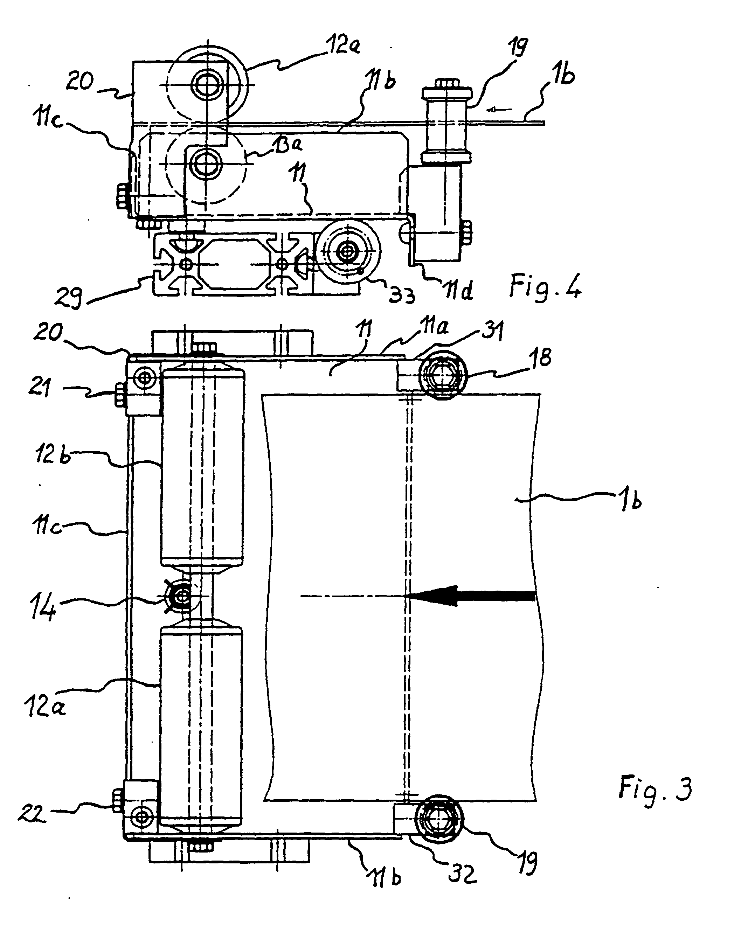

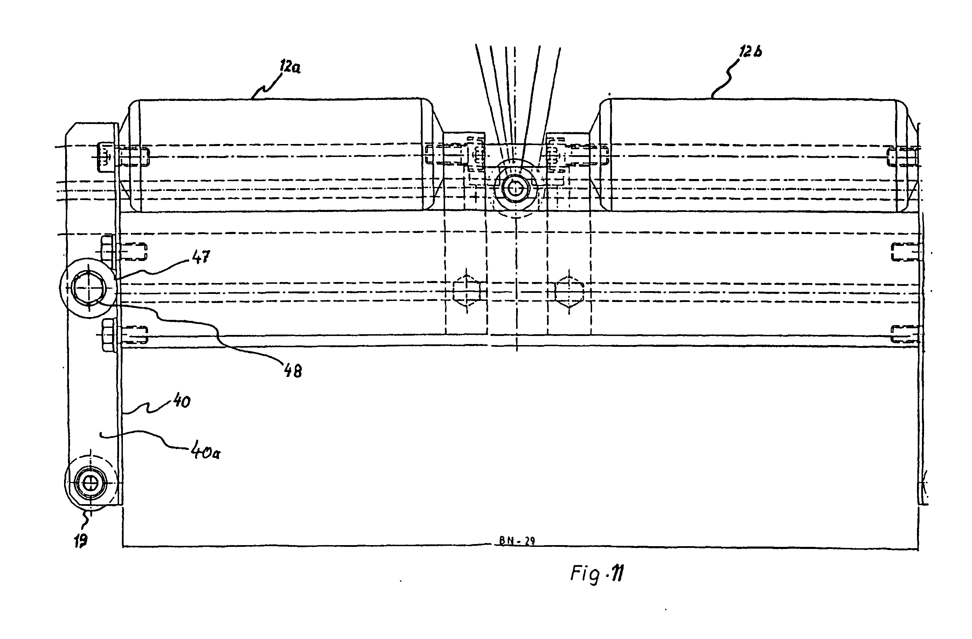

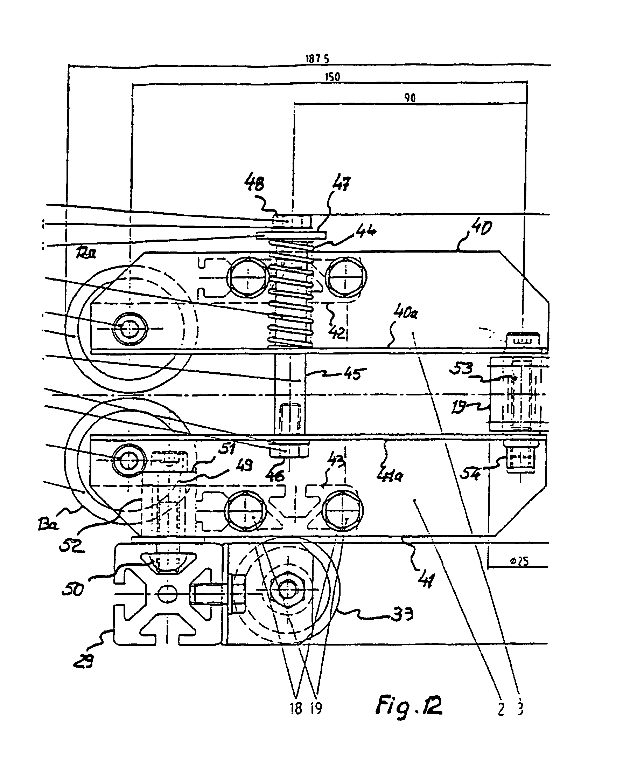

Während die Figuren 1 und 2 die Lenkstation an der Ein- und Ausschleuseinrichtung nur schematisch erkennen lassen, zeigen die Figuren 3 und 6 und 11 bis 13 einsatzfähige Ausfiihrungen. In allen Figuren der Zeichnung sind gleiche Teile mit den gleichen Bezugsziffern versehen.
Die Lenkstation 10 besteht im wesentlichen aus einer Konsole 11 mit darin befestigten Rollenpaaren 12a, 12b; 13a, 13b. Zwischen den Rollenpaaren wird der Untertrum 1b des Gurtes 1 hindurchgeführt.
Die Konsole 11 der Lenkstation ist um die Drehachse 14 des Drehzapfens 15 schwenkbar. Am vorderen Teil der Konsole, die sich in Laufrichtung des Untertrums 1b vor den Rotationsachsen der Lenkrollen befindet, sind Fühlerrollen 18 und 19 zu beiden Seiten des Gurttrums befestigt. Dieser kann mit seinen Kanten gegen die Fühlerrollen laufen. Sie sind drehbar und vermindern dadurch den Verschleiß durch geringe Rollreibung.

Die Konsole 11 ist mit zwei seitlichen Aufkantungen 11a, 11b und mit einer stirn seitigen Aufkantung 11c ausgeführt. An dem in Laufrichtung des Gurttrums 1b vor den Lenkrollen befindlichen Teil der Konsole ist diese mit einer Abkantung 11d versehen. Die seitlichen Aufkantungen 11a und 11b dienen der unmittelbaren Befestigung der unteren Lenkrollen 13a und 13b. Das obere Rollenpaar 12a, 12b wird von einem Rollenhalter 20 getragen, welcher an der stirnseitigen Aufkantung 11c durch Schrauben 21 und 22 befestigt ist. Der Rollenhalter für das obere Rollenpaar trägt ferner an einer einwärts gebogenen Lasche 20a eine Nietmutter 23, in welche eine Höheneinstellschraube 24 greift. Mit dieser Höheneinstellschraube 24 kann der Rollenhalter 20 für das obere Rollenpaar 12a, 12b justiert werden.

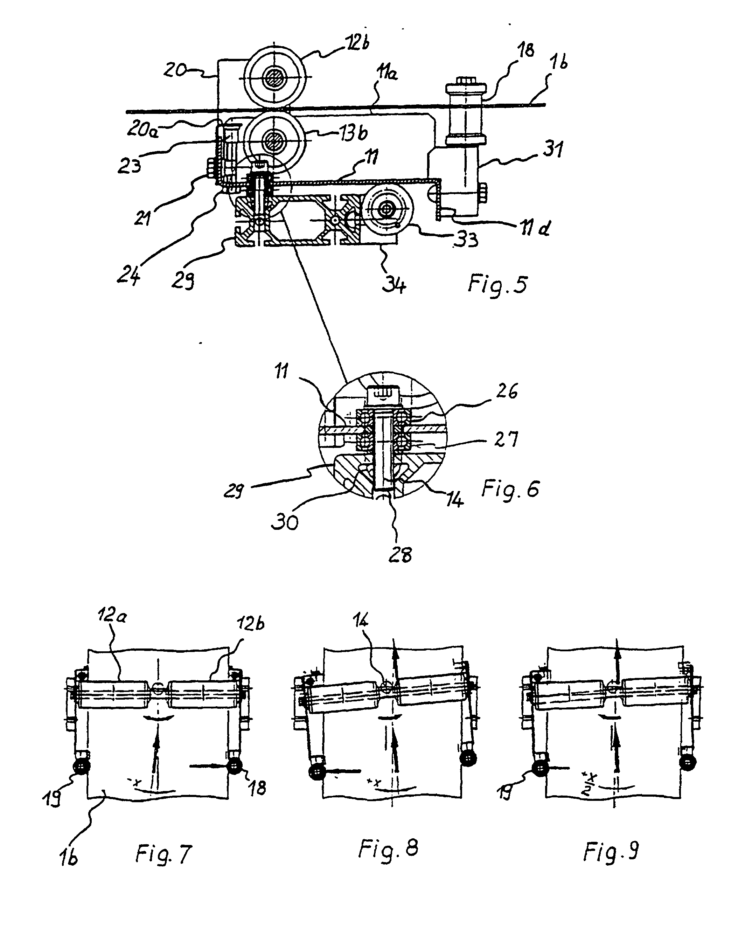

Die Konsole 11 ist beispielsweise, wie insbesondere die Figur 6 erkennen läßt, zwischen Kugelringen 26 und 27 eingespannt und über einen Drehzapfen in Form einer Zylinderschraube 28 mit einem Tragprofil 29 verbunden. Zur Befestigung greift die Zylinderschraube 28 in einen mit einem Innengewinde versehenen Nutenstein 30, der in eine Nut des Tragprofils ein geschoben ist. Die Konsole, und damit die gesamte Lenkstation, ist über die Kugelringe 26 und 27 um die Achse 14 drehbar.

Die vordere Abkantung 11d dient der Befestigung der Fühlerrollen 18 und 19 über Achshalter 31 und 32.

Zur Verringerung der Beanspruchung der Zylinderschraube 28 kann sich die Konsole 11 mit ihrem vorderen Teil auf einer Stützrolle 33 abstützen. Die Stützrolle 33 ist über einen Achshalter 34 am Tragprofil 29 befestigt.

Die Figur 7 läßt erkennen, daß der Gurt in der Bildebene eine nach rechts weisende Tendenz zum Ablaufen hat. Die rechte Gurtkante übt einen Druck auf die rechte Fühlerrolle 18 aus. Dadurch weicht die Fühlerrolle nach rechts aus, so daß eine Schwenkbewegung entgegen dem Drehsinn des Uhrzeiges entsteht, wie die Figur 9 verdeutlicht. Mit der Schwenkbewegung entstehen durch die vom Gurt angetriebenen Lenkrollen Reaktionskräfte mit einer nach links gerichteten Komponente, wodurch sich der Gurt wieder nach links zurückorientiert, bis die linke Fühlerrolle 19 Kontakt mit der linken Gurtkante erhält und durch die rückstellende Kraft ein wenig nach links ausweicht, so daß die gesamte Lenkstation in Richtung der Bewegung des Uhrzeigers zurückschwenkt. Dadurch wird die zurückstellende Wirkung der Lenkrollen zwar vermindert, jedoch wird der Gurtlauf weiter nach links ausgerichtet. Sobald sich alle Kräfte im Gleichgewicht befinden, ist der Selbstjustiervorgang beendet.

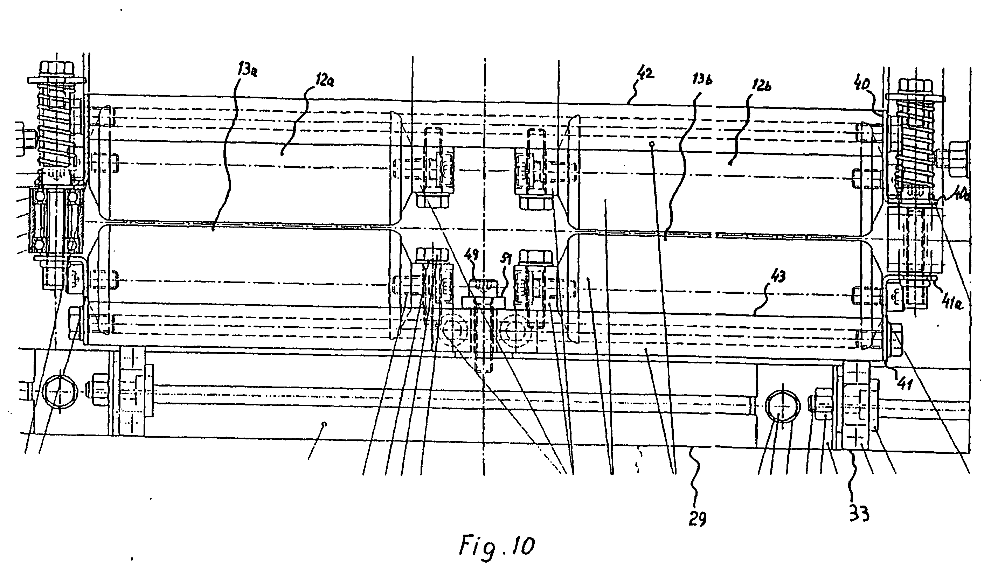

Bei der erfindungsgemäßen, federnden Ausführungsform nach den Figuren 10 bis 12 sind die Lenkrollen 12a, 13a und 12b, 13b an getrennten Seitenteilen 40 und 41 befestigt. Für eine Verbindung der Seitenteile miteinander sind Querverbindungsprofile 42 und 43 vorgesehen. Diese Teile bilden zusammen die die Lenkrollen tragenden Konsolen.

Die Seitenteile 40 und 41 der Konsole sind an den einander zugewandten Enden rechtwinklig nach außen abgekantet, um Befestigungsleisten 40a und 41a zu bilden. Sie dienen der Anordnung von Schraubendruckfedern 44 zur Erzeugung der erfindungsgemäßen federnden Belastung der Lenkrollen 12, so daß von beiden Seiten ein elastischer Druck auf den Untertrum des Fördergurtes ausgeübt wird. Die Schraubendruckfedern umfassen die Federführungen 45. Es sind zylindrische Stäbe, die durch die Seitenleisten 40a und 41a hindurchgreifen. Die unteren Enden sind mit Schrauben zur Bildung eines Federführungsanschlags 46 versehen. Die oberen Enden werden durch Druckscheiben 47 abgeschlossen und mit einer Schraube 48 gesichert. Die Schraubendruckfedern 44 sind zwischen den Druckscheiben 47 und den Seitenleisten 40a der Seitenteile 40 eingespannt.

Die gesamte Konsole mit den Lenkrollen 12 und 13 ist um die Drehachse 49 in Gestalt einer Zylinderschraube schwenkbar. Die Drehachse greift in ihrem unteren Ende durch einen Nutenstein 50, mit dem sie in dem Tragprofil 29 befestigt ist. Sie führt dabei durch eine Drehbuchse 51, die in einem Distanzteil drehbar gelagert ist, auf welchem sie sich mit einem Bund gleitend abstützt.

Die Führungsrollen 18 und 19 an den den Lenkrollen gegenüberliegenden Enden der Seitenteile 40 und 41 sind um Drehachsen 53 in Form von Zylinderschrauben drehbar. Sie greifen mit ihren unteren Enden in Schraubansätze 54, die mit den Seitenleisten 40a und 41a fest verbunden sind.

## Patentansprüche

1. Lenkrollenvorrichtung für den Fördergurt eines Bandförderers zur Verhinderung eines seitlichen Ablaufens des Gurtes von der vorgegebenen Bewegungsrichtung und Gegenlaufens gegen die Tragkonstruktion des Förderers mit einer Lenkstation, die um eine zur Gurtebene senkrechte und mittig zur Lenkstation angeordnete Drehachse (14) schwenkbar ist, wobei in einer Konsole der Lenkstation Lenkrollen (12, 13) um ihre Längsachsen (16, 17) drehbar gelagert sind, zwischen denen der Untertrum des Gurtes geführt ist, und wobei an der Lenkstation Fühlerrollen (18, 19) drehbar befestigt sind, die sich in Laufrichtung des Untertrums vor den Lenkrollen und an beiden Seiten des unteren Gurttrums befinden,
**dadurch gekennzeichnet,**
**daß** die Lenkrollen (12, 13) unmittelbar übereinander angeordnet sind und mit einer Anpreßkraft auf den zwischen ihnen geführten Gurt gedrückt sind und
**daß** Federelemente zum elastischen Andrücken der Lenkrollen (12, 13) an den Fördergurt vorgesehen sind.

2. Vorrichtung nach Anspruch 1, **dadurch gekennzeichnet, daß** die Lenkrollen paarweise von Druckfedern gegeneinander gedrückt werden.

3. Vorrichtung nach einem der Ansprüche 1 oder 2, **dadurch gekennzeichnet, daß** die Lenkrollen in einer geteilten Konsole gelagert sind, deren tragende Teile sich ober- und unterhalb der Gurtebene erstrecken und unter der Belastung gegeneinander gerichteter Federkräfte stehen.

4. Vorrichtung nach Anspruch 3, **dadurch gekennzeichnet, daß** die die Lenkrollen tragenden Seitenteile der Konsole mit Flanschleisten (40, 41) zur Befestigung von Schraubendruckfedem (44) versehen sind.

5. Vorrichtung nach einem der vorhergehenden Ansprüche, **dadurch gekennzeichnet, daß** die Lenkrollen mehrteilig sind und die die Lenkrollen tragenden Konsolenteile durch Quertraversen (42,43) miteinander verbunden sind.

6. Vorrichtung nach einem der vorhergehenden Ansprüche, **dadurch gekennzeichnet, daß** die die Drehachse bildende Zylinderschraube (49) durch eine Drehbuchse (51) geführt und diese drehbar in einem mit einem Trägerprofil (29) verschraubten Distanzteil (52) gelagert ist.

7. Vorrichtung nach einem der vorhergehenden Ansprüche, **dadurch gekennzeichnet, daß** die Konsole aus einem einteiligen Blech (11) mit aufund abgekanteten Stirn- und Seitenteilen (11a,11b, 11c,11d) besteht, an welchen die Lenk- und Fühlerrollen befestigt sind.

## Claims

1. A steering roller device for the conveyor belt of a belt conveyor for preventing the belt from slipping off sideways from the preset direction of movement and counter-rotation against the supporting structure of the conveyor with a steering station pivoting about an axis of rotation (14) vertical to the belt plane, whereby steering rollers (12, 13) are mounted rotatably about their longitudinal axes (16, 17) in a console of the steering station, between which the lower belt strand of the belt is guided, and whereby sensor rollers (18, 19) are mounted rotatably on the steering station, which are located in the direction of travel of the lower belt strand upstream of the steering rollers and on both sides of the lower belt strand,
**characterised in that**
the steering rollers (12, 13) are arranged directly above one another and are pressed with a press force onto the belt guided between them and **in that** springloaded elements are provided for elastically pressing the steering rollers (12, 13) onto the conveyor belt.

2. The device as claimed in Claim 1, **characterised in that** the steering rollers are pressed against one another in pairs by compression springs.

3. The device as claimed in any one of Claims 1 or 2, **characterised in that** the steering rollers are mounted in a divided console, whereof the bearing parts extend above and below the belt plane and are under the load of spring forces aligned against one another.

4. The device as claimed in Claim 3, **characterised in that** the side parts of the console carrying the steering rollers are provided with flange brackets (40, 41) for fastening cup springs (44).

5. The device as claimed in any one of the preceding claims, **characterised in that** the steering rollers are multi-part and the console parts bearing the steering rollers are connected to one another by transverse braces (42, 43).

6. The device as claimed in any one of the preceding claims, **characterised in that** the cylindrical screw (49) forming the axis of rotation is guided through a rotating liner (51) and the latter is mounted rotatably in a distance part (52) screwed with a bearer profile (29).

7. The device as claimed in any one of the preceding claims, **characterised in that** the console comprises a mono-part sheet (11) with front and side parts (11a, 11b, 11c, 11d) set on edge and bevelled, to which the steering and sensor rollers are attached.

## Revendications

1. Dispositif à rouleaux de guidage pour la bande transporteuse d'un convoyeur à bande, pour empêcher la bande de dévier latéralement du sens de déplacement prédéfini et de buter contre la construction porteuse du convoyeur, avec une station de guidage qui est apte à pivoter autour d'un pivot (14) perpendiculaire au plan de la bande et centré par rapport à la station de guidage, étant précisé qu'il est prévu dans une console de la station de guidage des rouleaux de guidage (12, 13) qui sont montés en rotation sur leurs axes longitudinaux (16, 17) et entre lesquels passe le brin inférieur de la bande, et qu'il est prévu des rouleaux capteurs (18, 19) qui sont fixés pivotants à la station de guidage et qui se trouvent en amont des rouleaux de guidage dans le sens de défilement du brin inférieur, et des deux côtés de celui-ci,
**caractérisé en ce que** les rouleaux de guidage (12, 13) sont directement superposés et sont pressés avec une force de pression sur la bande qui passe entre eux, et **en ce qu'**il est prévu des éléments élastiques pour presser élastiquement les rouleaux de guidage (12, 13) contre la bande du convoyeur.

2. Dispositif selon la revendication 1, **caractérisé en ce que** les rouleaux de guidage sont pressés par paires les uns contre les autres par des ressorts de compression.

3. Dispositif selon la revendication 1 ou 2, **caractérisé en ce que** les rouleaux de guidage sont montés dans une console divisée dont les éléments porteurs s'étendent au-dessus et au-dessous du plan de la bande et sont soumis à la contrainte d'élasticités dirigées en sens inverse.

4. Dispositif selon la revendication 3, **caractérisé en ce que** les parties latérales de la console qui portent les rouleaux de guidage sont pourvues de rebords (40, 41) pour la fixation de ressorts à boudin (44).

5. Dispositif selon l'une des revendications précédentes, **caractérisé en ce que** les rouleaux de guidage sont en plusieurs parties et les parties de console qui les portent sont reliées entre elles par des traverses (42, 43).

6. Dispositif selon l'une des revendications précédentes, **caractérisé en ce que** la vis à tête cylindrique (49) qui forme l'axe de rotation traverse un manchon rotatif (51) et celui-ci est monté pivotant dans une pièce d'écartement (52) vissée à un profilé de support (29).

7. Dispositif selon l'une des revendications précédentes, **caractérisé en ce que** la console se compose d'une tôle d'une seule pièce (11) avec des parties frontales et latérales repliées vers le haut et vers le bas (11a, 11b, 11c, 11d) auxquelles sont fixés les rouleaux de guidage et les rouleaux capteurs.
